# EUROPEAN PATENT APPLICATION

(11) **EP 4 738 576 A1**
(43) Date of publication of application: **06.05.2026**
(21) Application number: 25820331.4
(22) Date of filing: 04.04.2025
(51) Int. Cl.: H01M 50/256, H01M 50/105, B65H 29/24

(54) **POUCH CASE TRANSFER DEVICE AND POUCH CASE TRANSFER METHOD USING SAME**

(30) Priority: 03.06.2024 KR 20240072428
(71) Applicant: LG Energy Solution, Ltd., Seoul 07335 (KR)
(72) Inventor: KIM, Jae Woon, Daejeon 34122 (KR); LEE, Jin Soo, Daejeon 34122 (KR); CHOI, Jun Han, Daejeon 34122 (KR); KIM, Jun Wook, Daejeon 34122 (KR); KIM, Gyoung Deuk, Daejeon 34122 (KR)
(74) Representative: Goddar, Heinz J.
(86) International application number: PCT/KR2025/004546
(87) International publication number: WO 2025/254325

(57) **Abstract**

Disclosed are a pouch case transfer apparatus and a pouch case transfer method using the same, and more particularly a pouch case transfer apparatus including a tight contact unit configured to be in tight contact with one surface of a pouch case, the tight contact unit having a certain area, a support bar connected to the tight contact unit, the support bar being configured to move the tight contact unit, and a decompression member, wherein the tight contact unit includes a main plate configured to face an edge portion of the pouch case, and the main plate is provided at one surface thereof wherein the one surface of the main plate includes a first suction channel or a suction member exposed toward the edge portion of the pouch case, the first suction channel or the suction member being configured to suction the edge portion of the pouch case by decompression.

## Description

### [Technical Field]

This application claims the benefit of priority to Korean Patent Application No. 10-2024-0072428 filed on June 3, 2024, the disclosure of which is incorporated herein by reference in its entirety.

The present invention relates to a pouch case transfer apparatus and a pouch case transfer method using the same, and more particularly to a pouch case transfer apparatus capable of stably transferring a pouch case for secondary batteries without deformation of the pouch case when transferring the pouch case and a pouch case transfer method using the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, a shaped pouch case must be transferred to a predetermined position in a process of manufacturing a battery cell. To this end, many suction members are used to suction and grip an edge of the pouch case.

However, the suction members need to be replaced at predetermined intervals due to repeated decompression and release, and the initial cost of a pouch case transfer apparatus is high due to the use of many suction members.

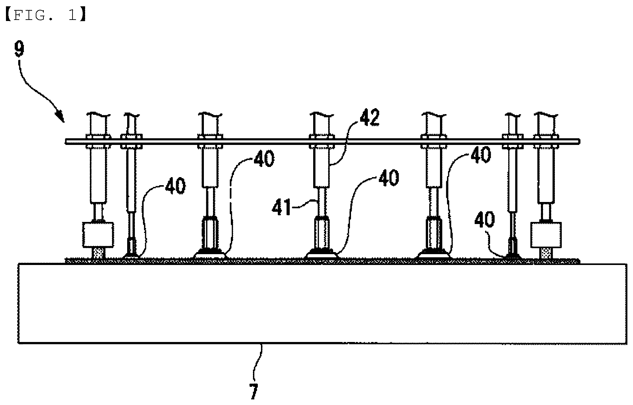

FIG. 1 is a front view of a conventional transfer apparatus. As shown in FIG. 1, the conventional sheet transfer apparatus 9 includes a support 7 configured to support a sheet, a suction member 40 configured to suction the sheet in tight contact with the sheet, a hollow shaft 41 connected to the suction member 40, and a support portion 42 configured to support the hollow shaft 41, wherein a suction hole is formed in the suction member 40.

In the conventional sheet transfer apparatus 9, the suction hole is formed in the suction member 40 configured to be in tight contact with the sheet to suction the sheet by drawing in air.

In this suction structure, it is possible to stably suction and transfer the sheet; however, the suction member 40 is located so as to correspond to all regions of the sheet. Consequently, the transfer apparatus still requires a large number of suction members 40.

Furthermore, when a large number of suction members are used, the pouch case is likely to be deformed by suction force.

### (Prior Art Document)

(Patent Document 1) Japanese Patent Application Publication No. 2019-127357

### [Disclosure]

### [Technical Problem]

The present invention has been made in view of the above problems, and it is an object of the present invention to provide a pouch case transfer apparatus capable of stably transferring a pouch case while minimizing the use of a suction member, which is a consumable, when transferring the pouch case, and a pouch case transfer method using the same.

### [Technical Solution]

A pouch case transfer apparatus according to the present invention to accomplish the above object includes a tight contact unit configured to be in tight contact with one surface of a pouch case (10), the tight contact unit having a certain area, a support bar (200) connected to the tight contact unit(100), the support bar being configured to move the tight contact unit (100), and a decompression member (300), wherein the tight contact unit (100) includes a main plate (110) configured to face an edge portion of the pouch case (10), and the main plate (110) is provided at one surface thereof wherein the one surface of the main plate (110) includes a first suction channel (112) or a suction member (116) exposed toward the edge portion (12) of the pouch case (10), the first suction channel or the suction member being configured to suction the edge portion (12) of the pouch case (10) by decompression.

Also, in the pouch case transfer apparatus according to the present invention, the one surface of the main plate (110) may include both the first suction channel (112) and the suction member (116).

Also, in the pouch case transfer apparatus according to the present invention, the first suction channel (112) may be depressed inwardly of the main plate (110).

Also, in the pouch case transfer apparatus according to the present invention, the first suction channel (112) may be located so as to correspond to a pair of edges located facing each other at the edge portion (12) of the pouch case (10).

Also, in the pouch case transfer apparatus according to the present invention, the first suction channel (112) may be located so as to correspond to two pairs of edges located facing each other at the edge portion (12) of the pouch case (10).

Also, in the pouch case transfer apparatus according to the present invention, the vertical section of the first suction channel (112) may have a polygonal shape open in a direction toward the edge portion (12) of the pouch case (10).

Also, in the pouch case transfer apparatus according to the present invention, the vertical section of the first suction channel (112) may have a circular shape open in the direction toward the edge portion (12) of the pouch case (10).

Also, in the pouch case transfer apparatus according to the present invention, the first suction channel (112) may have a linear shape, a wavy shape, and/or a zigzag shape with repeated peaks and valleys.

Also, in the pouch case transfer apparatus according to the present invention, a second suction channel (113) may be further provided at an area intersecting the first suction channel (112), the second suction channel being in communication with the first suction channel, the second suction channel having a predetermined pattern.

Also, in the pouch case transfer apparatus according to the present invention, the second suction channel (113) may have a shape having one or more circles or polygons and one or more lines or curves so as to communicate with the first suction channel (112).

Also, in the pouch case transfer apparatus according to the present invention, the suction member (116) may be a suction plate, at least a part of the suction plate being located in a receiving recess (115) formed in the one surface of the main plate (110).

Also, in the pouch case transfer apparatus according to the present invention, the main plate (110) may be provided with a first air passage (111) having one side in communication with the first suction channel (112) and an other side exposed to an other surface of the main plate (110), and the main plate (110) may be provided with a second air passage (114) having one side in communication with the suction member (116) and an other side exposed to the other surface of the main plate (110).

Also, in the pouch case transfer apparatus according to the present invention, the decompression member (300) may include a first decompression member (310) having a first air pipe (311) connected to the first air passage (111) exposed to the other surface of the main plate (110) and a first decompression pump (312) connected to the first air pipe (311) and a second decompression member (320) having a second air pipe (321) connected to the second air passage (114) exposed to the other surface of the main plate (110) and a second decompression pump (322) connected to the second air pipe (321).

A pouch case transfer method using the pouch case transfer apparatus includes a first step of locating the tight contact unit above one surface of a pouch case, a second step of downwardly moving the tight contact unit so as to be brought into tight contact with the pouch case, a third step of suctioning an edge portion of the pouch case, and a fourth step of upwardly moving the tight contact unit and moving the pouch case to a predetermined position.

Also, the pouch case transfer method using the pouch case transfer apparatus according to the present invention may further include a fifth step of stacking the pouch case, wherein suction force may be released in the fifth step.

### [Advantageous Effects]

As is apparent from the above description, in a pouch case transfer apparatus according to the present invention and a pouch case transfer method using the same, a tight contact unit is provided with a suction channel capable of suctioning and fixing an edge portion of a pouch case, whereby it is possible to minimize the use of the suction member.

Also, in the pouch case transfer apparatus according to the present invention and the pouch case transfer method using the same, it is possible to reduce deformation of the pouch case by minimizing the use of the suction member constituting the tight contact unit.

Furthermore, the pouch case transfer apparatus according to the present invention and the pouch case transfer method using the same have the advantage that it is possible to reduce maintenance costs by reducing the use of the suction member that constitutes the tight contact unit and is a consumable.

### [Description of Drawings]

FIG. 1 is a front view of a conventional transfer apparatus.
FIG. 2 is a perspective view of a pouch case transfer apparatus according to a first embodiment of the present invention when viewed from above in one direction.
FIG. 3 is a perspective view of the pouch case transfer apparatus shown in FIG. 2 when viewed from below in one direction.
FIG. 4 is a front view of the pouch case transfer apparatus shown in FIG. 2 when viewed from below.
FIG. 5 is a sectional view taken along line I-I of FIG. 3.
FIG. 6 is a sectional view showing the state in which a pouch case is suctioned by the pouch case transfer apparatus according to the first embodiment of the present invention.
FIG. 7 is a sectional view of a pouch case transfer apparatus according to a second embodiment of the present invention.
FIG. 8 is a perspective view of a pouch case transfer apparatus according to a third embodiment of the present invention when viewed from below in one direction.
FIG. 9 is a front view of the pouch case transfer apparatus shown in FIG. 8 when viewed from below.
FIG. 10 is a perspective view of a pouch case transfer apparatus according to a fourth embodiment of the present invention when viewed from below in one direction.
FIG. 11 is a view showing a modification of a first suction channel provided in the pouch case transfer apparatus according to the present invention.
FIG. 12 is a flowchart illustrating a method of transferring a pouch case using the pouch case transfer apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a pouch case transfer apparatus according to the present invention and a pouch case transfer method using the same will be described with reference to the accompanying drawings.

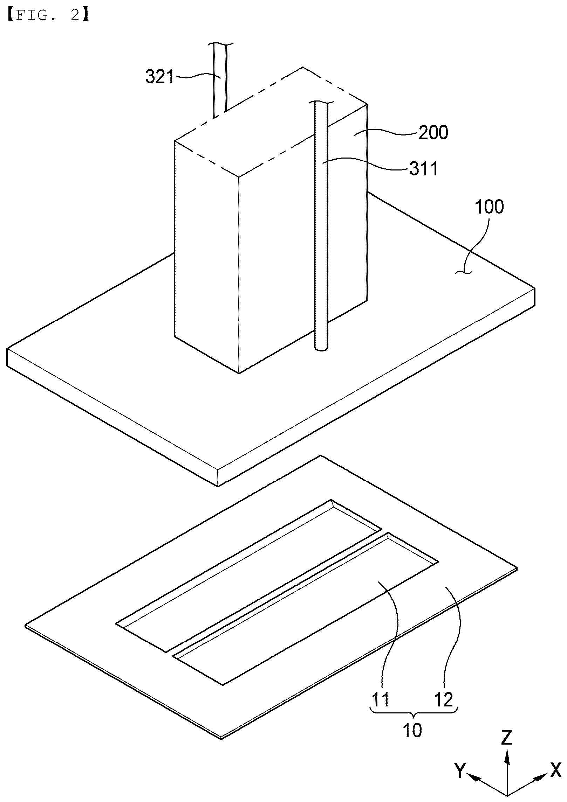

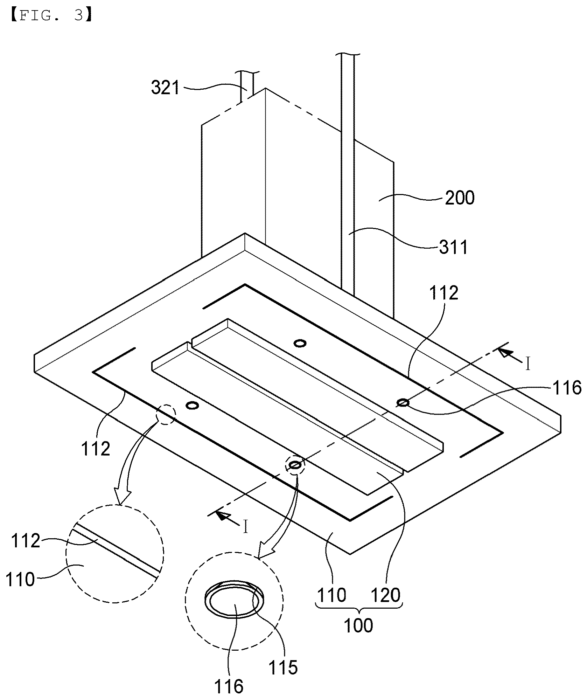

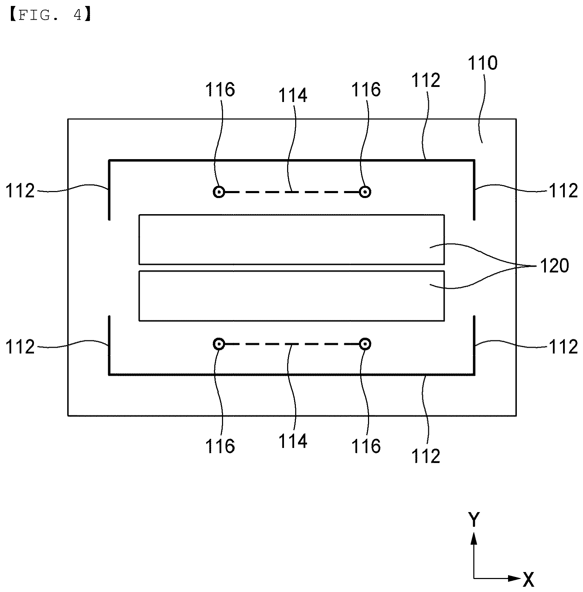

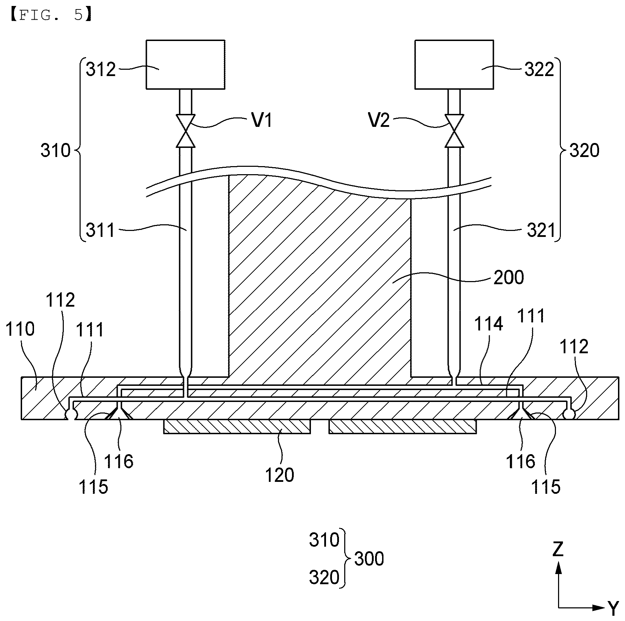

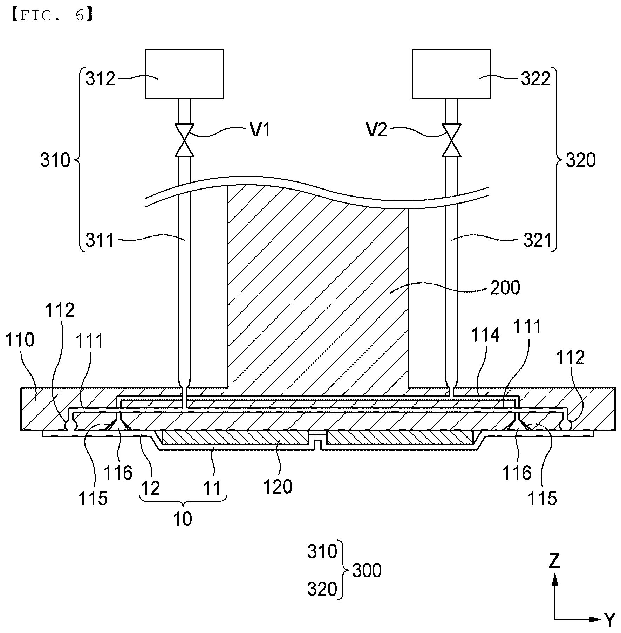

FIG. 2 is a perspective view of a pouch case transfer apparatus according to a first embodiment of the present invention when viewed from above in one direction, FIG. 3 is a perspective view of the pouch case transfer apparatus shown in FIG. 2 when viewed from below in one direction, and FIG. 4 is a front view of the pouch case transfer apparatus shown in FIG. 2 when viewed from below. In addition, FIG. 5 is a sectional view taken along line I-I of FIG. 3, and FIG. 6 is a sectional view showing the state in which a pouch case is suctioned by the pouch case transfer apparatus according to the first embodiment of the present invention.

Referring to FIGs. 2 to 6, the pouch case transfer apparatus according to the first embodiment of the present invention may include a tight contact unit 100, a support bar 200, and a decompression member 300.

First, a pouch case 10 may include a cup portion 11 defining a certain space portion configured to receive an electrode assembly and an electrolyte solution and an edge portion 12 extending outwardly of the cup portion 11 for sealing.

Here, the pouch case 10 is made of a laminate sheet including an outer resin layer, a metal layer, and an inner resin layer, wherein the laminate sheet is shaped to form the cup portion.

The outer resin layer, which is located on the outermost side of the pouch case 10, may be made of a heat-resistant polymer that exhibits excellent tensile strength, resistance to moisture permeation, and resistance to air transmission such that the outer resin layer exhibits high heat resistance and chemical resistance while protecting the electrode assembly. As an example, the outer resin layer may be made of nylon or polyethylene terephthalate; however, the present invention is not limited thereto.

The metal layer, which abuts the outer resin layer, corresponds to a barrier layer configured to prevent moisture or various gases from permeating into a battery from the outside. An aluminum thin film, which is lightweight and easily shapeable, may be used as a preferred material for the metal layer.

The inner resin layer is in direct contact with the electrode assembly, and therefore the inner resin layer must exhibit high insulation properties and high electrolytic resistance. In addition, the inner resin layer must exhibit high sealability in order to hermetically isolate the pouch case from the outside, i.e., a thermally-bonded sealed portion between inner layers must exhibit excellent thermal bonding strength.

The inner resin layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The tight contact unit 100 for transfer of the pouch case 10 may include a main plate 110, which is a flat plate having a certain area, and an auxiliary plate 120 provided in the center of one surface of the main plate 110 so as to protrude therefrom by a certain length as needed.

Specifically, the main plate 110, which is a roughly flat plate, may be in tight contact with an edge portion 12 of one surface of the pouch case 10, in which case the area of the main plate 110 that faces the one surface of the pouch case 10 may be similar to the area of the one surface of the pouch case 10, e.g., slightly less, equal to, or slightly greater than the area of the one surface of the pouch case, such that most of the one surface of the pouch case 10 is in tight contact with the main plate.

In addition, referring to FIG. 2, an upper surface of the main plate 110, which is the other surface of the main plate, is connected to the support bar 200 such that the main plate 110 is moved by the support bar 200, and as a result, the pouch case 10 suctioned by the main plate 110 is moved to a predetermined position.

Meanwhile, the main plate 110 may be provided with a first air passage 111, a first suction channel 112, a second air passage 114, a receiving recess 115, and a suction member 116 in order to suction and fix the edge portion 12 of the pouch case 10.

Specifically, the first air passage 111 for movement of first air is formed through the interior of the main plate 110, wherein one side of the first air passage is formed so as to face downwardly of the main plate 110 and communicates with the first suction channel 112, and the other side of the first air passage is formed so as to face upwardly of the main plate 110 and is exposed to the other surface of the main plate 110.

The first suction channel 112 is configured to suction and fix the edge portion 12 of the one surface of the pouch case 10 by decompression, and is formed in a lower surface of the main plate 110, which faces the one surface of the pouch case 10, in an inwardly depressed shape.

In this case, the first suction channel 112 is in communication with the first air passage 111 and is also exposed toward one surface of the edge portion 12 of the pouch case 10. It is preferable for the first suction channel to be provided in a pair spaced apart from each other by a certain distance so as to correspond to a pair of edges located facing each other at the edge portion 12 of the pouch case 10, and it is more preferable for the first suction channel to be provided in two pairs spaced apart from each other by a certain distance so as to correspond to two pairs of edges located facing each other in order to more reliably suction and fix the pouch case 10 (see FIG. 4).

Meanwhile, the first air passage 111 is divided into a plurality of branches in the main plate 110 so as to communicate with the first suction channel 112. In this structure, all regions of the first suction channel 112 may be decompressed at approximately the same time.

Although FIG. 4 shows that the first suction channel 112 is not provided in some directions (3 o'clock direction and 9 o'clock direction), first suction channels 112 may be formed so as to be connected to each other as needed.

The vertical section of the first suction channel 112 may have a circular shape, a part of which is open toward the edge portion 12 of the pouch case 10 (see FIG. 5).

The second air passage 114 for movement of second air is formed through the interior of the main plate 110, wherein one side of the second air passage is formed so as to face downwardly of the main plate 110 and communicates with the suction member 116, and the other side of the second air passage is formed so as to face upwardly of the main plate 110 and is exposed to the upper surface of the main plate 110, which is the other surface of the main plate.

The suction member 116 is configured to suction and fix the edge portion 12 of the one surface of the pouch case 10 by decompression, and is located at one surface of the main plate 110, which faces the one surface of the pouch case 10. Specifically, the receiving recess 115 is formed in the lower surface of the main plate 110, which is the one surface of the main plate, so as to have a space portion of a certain size, and at least a part of the suction member 116 is located in the receiving recess 115 while facing one surface of the edge portion 12 of the pouch case 10.

In this case, the suction member 116 is located between the edge portion 12 that faces the first air passage 111 and the cup portion 11, and is preferably provided in plural spaced apart from each other by a certain distance so as to correspond to a pair of edges located facing each other at the edge portion 12 of the pouch case 10 in the overall-length direction (X-axis direction). For example, two to three suction members may be located in each overall-length direction (X-axis direction), and therefore a total of four to six suction members may be located.

Here, the suction member 116 may be a suction plate that generates suction force by decompression and loses the suction force upon decompression release. For example, the suction member may be made of a flexible material and shaped so as to have a width gradually increasing toward the bottom thereof.

Similarly to the first air passage 111, the second air passage 114 is also divided into a plurality of branches in the main plate 110 so as to communicate with the plurality of suction members 116. In this structure, all of the suction members 116 may be decompressed at approximately the same time.

It is possible to suction and fix the edge portion 12 of the pouch case 10 using only one of the first suction channel 112 and the suction member 116. When the first suction channel 112 and the suction member 116 are provided simultaneously, however, it is possible to more reliably suction and fix the edge portion 12 of the pouch case 10, and furthermore, the use of the suction members 116 is minimized, whereby it is possible to prevent deformation of the pouch case 10.

Meanwhile, the auxiliary plate 120 is a flat plate having a smaller area than the main plate 110, and may be formed on one surface of the main plate 110 so as to protrude downward.

It is preferable for the auxiliary plate 120 to be located near the center of one surface of the main plate 110 such that the auxiliary plate can be received in the cup portion 11 of the pouch case 10 and be in tight contact with one surface of the cup portion 11, and it is more preferable for the auxiliary plate to have a thickness such that the main plate 110 and the edge portion 12 of the pouch case 10 can be in tight contact with each other or slightly spaced apart from each other when the auxiliary plate is in tight contact with one surface of the cup portion 11.

Although the figures show two auxiliary plates 120, it is obvious that the position and number of the auxiliary plates 120 can be changed depending on the shape and number of the cup portions 11 of the pouch case 10.

Of course, the auxiliary plate 120 may be omitted as needed. The auxiliary plate 120 may contribute to reducing deformation of the cup portion 11 during transfer of the pouch case 10, but the auxiliary plate 120 may be omitted as needed.

The support bar 200 may be in the shape of a bar having a certain length, wherein one side of the support bar is connected to the tight contact unit 100, more specifically to the other surface of the main plate 110, which is the upper surface of the main plate.

Although not shown in the figures, the support bar 200 may be connected to a robotic arm, a moving rail, or the like, and may be controlled to move to a predetermined position and then return to the original position thereof. The principle of operation thereof is known in the art, and therefore a detailed description thereof will be omitted.

In addition, although the figures show that the support bar 200 has a quadrangular pillar shape, the shape of the support bar may be changed to any other shape, such as a cylindrical shape.

Next, the decompression member 300 will be described. The decompression member 300 includes a first decompression member 310 and a second decompression member 320. The first decompression member 310 is configured to maintain the first air passage 111 at a certain level of decompression, and may include a first air pipe 311 connected to the first air passage 111 exposed to the other surface of the main plate 110 and a first decompression pump 312 connected to the first air pipe 311.

In addition, the second decompression member 320 is configured to maintain the second air passage 114 at a certain level of decompression, and may include a second air pipe 321 connected to the second air passage 114 exposed to the other surface of the main plate 110 and a second decompression pump 322 connected to the second air pipe 321.

Here, each of the first air pipe 311 and the second air pipe 321 may be made of a flexible and stretchable material, and the material for each of the first air pipe and the second air pipe is not particularly limited as long as the material does not affect the decompression force of each of the first decompression pump 312 and the second decompression member 320 when operated.

Reference symbol V1 indicates a first opening and closing valve provided in the first air pipe 311, and reference symbol V2 indicates a second valve provided in the second air pipe 321.

The principle by which the decompression member 300 is operated will be briefly described. When the first decompression pump 312 is operated, the first decompression pump suctions air from the first air pipe 311 and the first air passage 111 to maintain the first suction channel 112 at a certain level of decompression, and as a result, the edge portion 12 of the pouch case 10 may be suctioned in tight contact with the first suction channel.

In addition, when the second decompression pump 322 is operated, the second decompression pump suctions air from the second air pipe 321 and the second air passage 114 to maintain the suction member 116 at a certain level of decompression, and as a result, the edge portion 12 of the pouch case 10 may be suctioned in tight contact with the suction member.

Meanwhile, it is possible to control decompression by suctioning air from both the first air passage and the second air passage using one decompression member, e.g., one air pipe having an opening and closing valve and one decompression pump. In this case, however, it is substantially impossible to individually adjust the decompression forces of the first air passage and the second air passage, and furthermore, the pouch case cannot be suctioned at all when the air pipe or the decompression pump is abnormal. Consequently, it is preferable to separately provide the first decompression member 310 and the second decompression member 320.

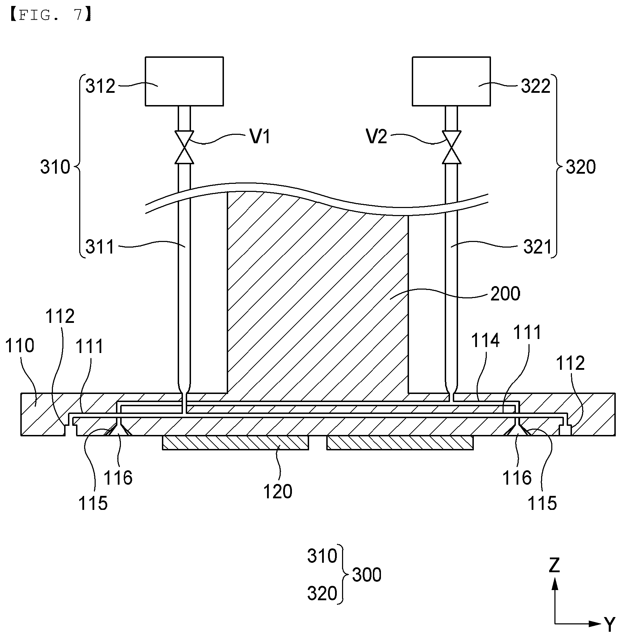

FIG. 7 is a sectional view of a pouch case transfer apparatus according to a second embodiment of the present invention. Referring to FIG. 7, the pouch case transfer apparatus according to the second embodiment of the present invention is identical to the pouch case transfer apparatus according to the first embodiment described with reference to FIGs. 2 to 6, except for the shape of a first suction channel 112, and therefore a description of the same configuration will be omitted.

In the pouch case transfer apparatus according to the second embodiment, the vertical section of the first suction channel 112 has a quadrangular shape, a part of which is open toward an edge portion 12 of a pouch case 10.

Although the vertical section of the first suction channel 112 is shown as having a quadrangular shape, a part of which is open, in FIG. 7, the vertical section may be formed in a polygonal shape, such as a triangular shape, a pentagonal shape, a hexagonal shape, or an octagonal shape, a part of which is open.

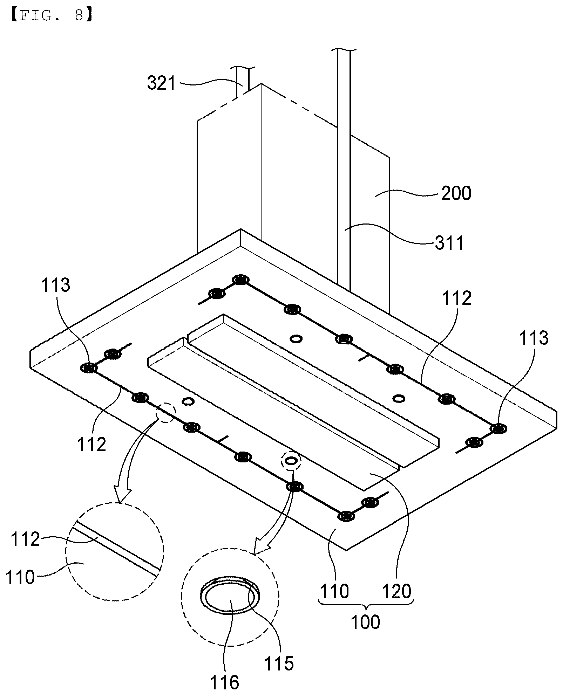

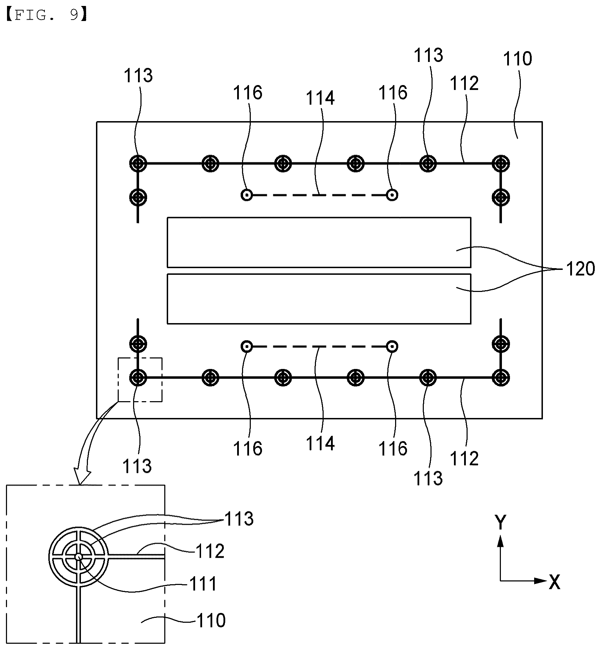

FIG. 8 is a perspective view of a pouch case transfer apparatus according to a third embodiment of the present invention when viewed from below in one direction, and FIG. 9 is a front view of the pouch case transfer apparatus shown in FIG. 8 when viewed from below.

Referring to FIGs. 8 and 9, the pouch case transfer apparatus according to the third embodiment of the present invention is identical to the pouch case transfer apparatus according to the first embodiment described with reference to FIGs. 2 to 6, except that a main plate 110 is further provided with a second suction channel 113, and therefore a description of the same configuration will be omitted.

In the pouch case transfer apparatus according to the third embodiment, a second suction channel 113 having a certain pattern so as to communicate with a first suction channel 112 is further provided.

In this case, the second suction channel 113 may have a shape including one or more circles and one or more lines or curves so as to be in communication with the first suction channel 112.

In an example, the second suction channel 113 according to the third embodiment may have a pattern shape including a plurality of circles having the same center and different diameters and one or more lines connecting the circles to each other while passing through the centers of the circles.

More specifically, the center of the second suction channel 113 may be located in the first suction channel 112 or at the intersection of the first suction channels 112, one circle, more preferably two or more circles, may be located outside the center, and one or more lines may pass through the centers of the circles so as to connect the circles to each other.

When the first air passage 111 and the first suction channel 112 are decompressed, therefore, the second suction channel 113 is also decompressed.

In particular, the suction area of the second suction channel 113 is large since the second suction channel has a pattern shape, and the second suction channel is provided in plural along the first suction channel 112 so as to correspond to corners of the edge portion 12 of the pouch case 10, the part of the edge portion of the pouch case in the overall-length direction (X-axis direction), and the part of the edge portion of the pouch case in the overall-width direction (Y-axis direction), whereby stability may be further increased during transfer of the pouch case 10.

Although FIGs. 8 and 9 show a total of 16 second suction channels 113, the number of the second suction channels may be changed depending on the size of the pouch case 10.

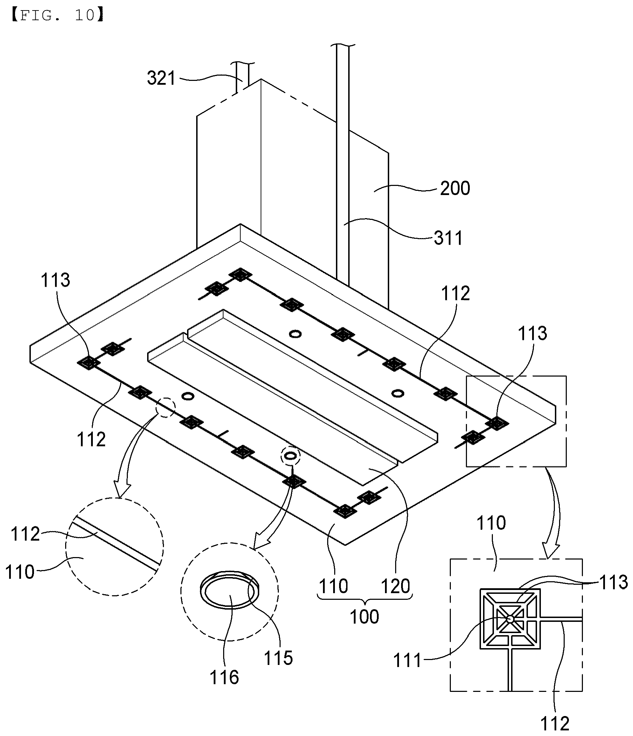

FIG. 10 is a perspective view of a pouch case transfer apparatus according to a fourth embodiment of the present invention when viewed from below in one direction. Referring to FIG. 10, the pouch case transfer apparatus according to the fourth embodiment of the present invention is identical to the pouch case transfer apparatus according to the third embodiment, except for the shape of a second suction channel 113, and therefore a description of the same configuration will be omitted.

The second suction channel 113 according to the fourth embodiment may have a shape including one or more polygons and one or more lines or curves so as to communicate with a first suction channel 112.

In an example, the second suction channel 113 according to the fourth embodiment may have a pattern shape including a plurality of quadrangles having the same center and different diagonal lengths and one or more lines passing through the centers of the quadrangles.

Of course, it is obvious that the circular shape of the third embodiment and the quadrangular shape of the fourth embodiment can be provided together and various other shapes, such as a triangle, a pentagon, or a hexagon, can be used instead of the quadrangular shape.

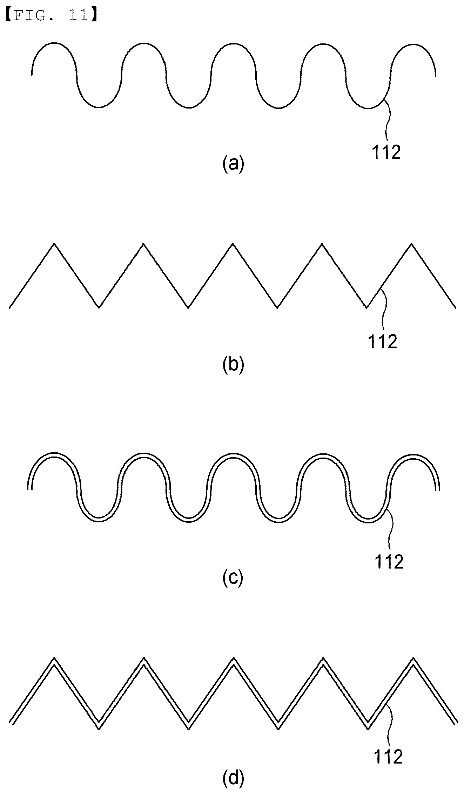

FIG. 11 is a view showing a modification of the first suction channel provided in the pouch case transfer apparatus according to the present invention. Referring to FIG. 11, the first suction channel 112 according to the present invention may have a wavy shape, a zigzag shape with repeated peaks and valleys, or a plurality of wavy or zigzag shapes spaced apart from each other by a predetermined distance.

Unlike the first embodiment, the first suction channel 112 having the shape according to the modification has the advantage that, compared to a straight shape, the area of the first suction channel in contact with the edge portion 12 of the pouch case 10 is increased, whereby it is possible to more reliably suction and fix the pouch case 10.

Of course, it is possible to change the circular or quadrangular shape of the second suction channel 113 according to each of the third and fourth embodiments described above to the shape according to the modification.

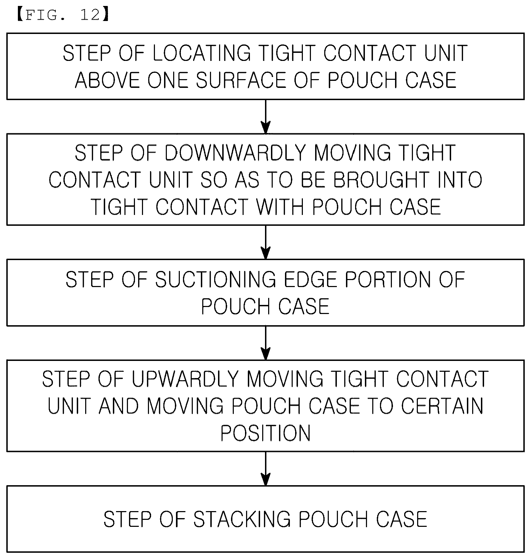

FIG. 12 is a flowchart illustrating a method of transferring a pouch case using the pouch case transfer apparatus according to the present invention.

The pouch case transfer method according to the present invention may include a first step of locating the tight contact unit above one surface of a pouch case, a second step of downwardly moving the tight contact unit so as to be brought into tight contact with the pouch case, a third step of suctioning an edge portion of the pouch case, a fourth step of upwardly moving the tight contact unit and moving the pouch case to a certain position, and a fifth step of stacking the pouch case.

First, the first step of locating the tight contact unit above one surface of a pouch case is a step of locating the tight contact unit above an upper surface of a pouch case having a cup portion formed therein, which is one surface of the pouch case, in order to move the pouch case to a predetermined position.

The second step of downwardly moving the tight contact unit so as to be brought into tight contact with the pouch case is a step of downwardly moving the support bar connected to the tight contact unit in a direction toward the pouch case such that the tight contact unit is brought into tight contact with the pouch case.

If the tight contact unit is provided with an auxiliary plate, the auxiliary plate is seated in the cup portion of the pouch case when the tight contact unit is moved downward.

In the third step of suctioning an edge portion of the pouch case, the first decompression pump is operated to draw in air in the state in which the first suction channel is in tight contact with the edge portion of the pouch case such that the first air pipe, the first air passage, and the first suction channel are sequentially decompressed, whereby the edge portion of the pouch case is suctioned and fixed by the first suction channel.

In addition, the second decompression pump is operated to draw in air in the state in which the suction member is in tight contact with the edge portion of the pouch case such that the second air pipe, the second air passage, and the suction member are sequentially decompressed, whereby the edge portion of the pouch case is suctioned and fixed by the suction member.

The fourth step of upwardly moving the tight contact unit and moving the pouch case to a certain position is a step of moving the pouch case to a predetermined position in the state in which the edge portion is suctioned and fixed by the first suction channel and/or the suction member.

The fifth step of stacking the pouch case is a step of stacking the transferred pouch case at a predetermined position, which may be achieved by releasing the suction force of the first suction channel and/or the suction member when the tight contact unit reaches the predetermined position.

The above steps may be controlled by a separate controller.

Those skilled in the art to which the present invention pertains will appreciate that various applications and modifications are possible within the category of the present invention based on the above description.

### (Description of Reference Symbols)

10: Pouch case
11: Cup portion 12: Edge portion
100: Tight contact unit
110: Main plate
111: First air passage 112: First suction channel
113: Second suction channel 114: Second air passage
115: Receiving recess 116: Suction member
120: Auxiliary plate
200: Support bar
300: Decompression member
310: First decompression member
311: First air pipe 312: First decompression pump
320: Second decompression member
321: Second air pipe 322: Second decompression pump
V1: First opening and closing valve V2: Second opening and closing valve

## Claims

1. A pouch case transfer apparatus comprising:
a tight contact unit configured to be in tight contact with one surface of a pouch case, the tight contact unit having a certain area;
a support bar connected to the tight contact unit, the support bar being configured to move the tight contact unit; and
a decompression member, wherein
the tight contact unit comprises a main plate configured to face an edge portion of the pouch case, and
the main plate is provided at one surface thereof wherein the one surface of the main plate includes a first suction channel or a suction member exposed toward the edge portion of the pouch case, the first suction channel or the suction member being configured to suction the edge portion of the pouch case by decompression.

2. The pouch case transfer apparatus according to claim 1, wherein the one surface of the main plate includes both the first suction channel and the suction member.

3. The pouch case transfer apparatus according to claim 2, wherein the first suction channel is depressed inwardly of the main plate.

4. The pouch case transfer apparatus according to claim 3, wherein the first suction channel is located so as to correspond to a pair of edges located facing each other at the edge portion of the pouch case.

5. The pouch case transfer apparatus according to claim 4, wherein the first suction channel is located so as to correspond to two pairs of edges located facing each other at the edge portion of the pouch case.

6. The pouch case transfer apparatus according to claim 3, wherein a vertical section of the first suction channel has a polygonal shape open in a direction toward the edge portion of the pouch case.

7. The pouch case transfer apparatus according to claim 3, wherein a vertical section of the first suction channel has a circular shape open in a direction toward the edge portion of the pouch case.

8. The pouch case transfer apparatus according to claim 3, wherein the first suction channel has a linear shape, a wavy shape, and/or a zigzag shape with repeated peaks and valleys.

9. The pouch case transfer apparatus according to claim 8, wherein a second suction channel is further provided at an area intersecting the first suction channel, the second suction channel being in communication with the first suction channel, the second suction channel having a predetermined pattern.

10. The pouch case transfer apparatus according to claim 9, wherein the second suction channel has a shape having one or more circles or polygons and one or more lines or curves so as to communicate with the first suction channel.

11. The pouch case transfer apparatus according to claim 3, wherein the suction member is a suction plate, at least a part of the suction plate being located in a receiving recess formed in the one surface of the main plate.

12. The pouch case transfer apparatus according to claim 3, wherein
the main plate is provided with a first air passage having one side in communication with the first suction channel and an other side exposed to an other surface of the main plate, and
the main plate is provided with a second air passage having one side in communication with the suction member and an other side exposed to the other surface of the main plate.

13. The pouch case transfer apparatus according to claim 12, wherein the decompression member comprises:
a first decompression member having a first air pipe connected to the first air passage exposed to the other surface of the main plate and a first decompression pump connected to the first air pipe; and
a second decompression member having a second air pipe connected to the second air passage exposed to the other surface of the main plate and a second decompression pump connected to the second air pipe.

14. A pouch case transfer method using the pouch case transfer apparatus according to any one of claims 1 to 13, the pouch case transfer method comprising:
a first step of locating the tight contact unit above one surface of a pouch case;
a second step of downwardly moving the tight contact unit so as to be brought into tight contact with the pouch case;
a third step of suctioning an edge portion of the pouch case; and
a fourth step of upwardly moving the tight contact unit and moving the pouch case to a predetermined position.

15. The pouch case transfer method according to claim 14, further comprising:
a fifth step of stacking the pouch case, wherein
suction force is released in the fifth step.
